(19)

Europäisches
Patentamt
European
Patent Office
Office européen
des brevets

(11) **EP 2 796 289 A1**

(12) **EUROPEAN PATENT APPLICATION**

(43) Date of publication:
**29.10.2014 Bulletin 2014/44**

(51) Int Cl.:
**B32B 27/30** *(2006.01)*  **B32B 27/32** *(2006.01)*

(21) Application number: **13165010.3**

(22) Date of filing: **23.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Borealis AG
1220 Vienna (AT)**

(72) Inventors:
• **Delgadillo, Omar
Montreal, Quebec H2K 4B8 (CA)**

• **Piel, Tanja
4030 Linz (AT)**
• **Sandholzer, Daniel
4030 Linz (AT)**

(74) Representative: **Campbell, Neil Boyd
Dehns
St Bride's House
10 Salisbury Square
London
EC4Y 8JD (GB)**

(54) **Film**

(57)     A multilayer polymer film comprising
(A) a barrier layer comprising a polar barrier polymer;
(B) a tie layer comprising a minor portion of an amphiphilic polymer and a major portion of a non-polar ethylene polymer; and

(C) a non-polar polyethylene layer comprising a non-polar ethylene polymer as used in layer (B);

wherein layer (B) is adjacent layers (A) and (C) and layers (A) to (C) are present in the order ABC in the film.

FIG. 1

EP 2 796 289 A1

## Description

The invention described herein relates to multilayer polymer films, especially barrier films having a low oxygen transmission rate. The films of the invention include a barrier layer and non polar polyethylene layer linked by an adhesive tie layer comprising both an amphiphilic polymer and non-polar ethylene polymer. These films possess improved impact resistance and tear resistance compared to conventional barrier layer containing polymer films. Also provided are methods for making polymer films and uses of the polymer films, e.g. in the food packaging industry.

## Background

Multilayer barrier films are widely used, especially as packaging materials. These films can exhibit advantageous properties resulting from the different properties of the various layers within the film. Films for packaging foods often need to have a low oxygen transmission rate (OTR), and this is achieved using a gas-impermeable barrier layer. Packaging films are also sealed so these films also contain a heat-seal layer to enable heat sealing of the film to itself or another substrate. Such a combination of properties cannot readily be obtained by the use of a single material, but can be obtained when multiple layers of different materials are used.

One example of such a film is described in EP-A-2208685, which discloses a five-layer polymer film for packaging foodstuffs. This film has a central barrier layer and two outer heat-seal layers attached to the barrier layer by adhesive tie layers. The tie layers adhere to the different polymers of the barrier and heat-seal layers and allow the whole film to be laminated in a stable manner.

The tie layers used in films of the type discussed above are typically made from amphiphilic polymers, i.e. polymers having both polar and non-polar regions. The amphiphilic nature of the material allows the tie layer to adhere both to layers containing polar polymers (e.g. typical barrier materials such as ethylene-vinyl alcohol copolymer) and also to layers containing non-polar polymers (e.g. polyethylene). Amphiphilic polymers typically used in tie layers for films include modified polyolefins, such as polypropylene having in the region of 10% by weight maleic anhydride groups.

Thus, polar polymeric barrier materials such as ethylene-vinyl alcohol copolymer (EVOH) are often used as components of multilayer films because of their properties, especially their gas-barrier properties. In particular, these materials can exhibit very low oxygen transmission rates which makes them suitable for use in films for packaging in modified oxygen environments. However, the tear and impact properties of multilayer films that include such polar materials are typically poor because they are governed by the properties of the polar material. For example, EVOH is brittle material having high stiffness and low tear resistance and films that include an EVOH-containing layer are typically quite stiff and tear easily. Ways for dealing with this problem that have previously been suggested include controlling the temperature at which the film is used, and controlling the thickness of the polar layer. However, the thickness of the polar layer may be fixed by other considerations (e.g. the required oxygen transmission rate) and temperature control cannot always be implemented in temperature-sensitive applications.

There therefore exists a need for improved ways of increasing the impact and tear resistance of multilayer barrier films which have low OTR.

The present inventors have discovered that including a major amount of a particular non-polar ethylene polymer in a tie layer comprising an amphiphilic polymer results in a surprising increase in the resilience of multilayer film comprising this tie layer. The presence of this component does not affect the gas barrier properties of the film and does not affect the ability of the tie layer to link the barrier layer and the non polar ethylene layer. In particular, tear resistance of the film may be improved by around 100% or more, especially in the transverse direction. This is a particular benefit in films intended to provide a barrier to oxygen ingress, because any damage to such films usually results in a significant loss in barrier properties.

Alternatively, using the same non polar ethylene polymer in the tie layer as the (C) layer as defined herein, improves mechanical performance.

## Summary of Invention

Thus, viewed from one aspect the invention provides a multilayer polymer film comprising

(A) a barrier layer comprising a polar barrier polymer;
(B) a tie layer comprising a minor portion of an amphiphilic polymer and a major portion of a non-polar ethylene polymer; and
(C) a non-polar polyethylene layer comprising the non-polar ethylene polymer as used in layer (B);

wherein layer (B) is adjacent layers (A) and (C) and layers (A) to (C) are present in the order ABC in the film.

Thus, the film is produced such that the tie layer adheres both to the barrier layer and also to the non-polar ethylene polymer layer.

Viewed from another aspect the invention provides a multilayer polymer film comprising

(A) a barrier layer comprising a polar barrier polymer;
(B) a tie layer comprising a minor portion of an amphiphilic polymer and a major portion of a non-polar ethylene polymer (I) having a density of 920 to 945 kg/m$^3$; and
(C) a non-polar polyethylene layer comprising a non-polar ethylene polymer;

wherein layer (B) is adjacent layers (A) and (C) and layers (A) to (C) are present in the order ABC in the film.

In a preferred embodiment, the film further comprises at least one outer layer (D) which is disposed adjacent to the non-polar polyethylene layer (C), which outer layer comprises a non-polar ethylene polymer. This layer is preferably a heat sealing layer.

In a further aspect, the invention provides the use of a multilayer polymer film as defined herein as a packaging material, especially as a packaging material for a food, a pharmaceutical, a cosmetic or a medical device.

In another aspect, the invention provides a method for packaging an item, especially a food, a pharmaceutical, a cosmetic or a medical device, the method comprising wrapping an item with a film as herein defined.

In a yet further aspect, the invention provides a process for preparing a film as defined herein, the process comprising co-extruding and/or laminating the barrier layer, the non-polar polyethylene layer and the tie layer, optionally with the outer layer so as to form said film.

## Detailed Description of invention

The present invention is concerned with improving the properties of multilayer films, especially gas-impermeable barrier films for packaging food items and the like. The films of the invention include at least three layers, a barrier layer (A) comprising a polar barrier polymer, a non-polar polyethylene layer (C) comprising a non-polar ethylene polymer, and a tie layer (B) to adhere the barrier layer to the non-polar polyethylene layer, the tie layer comprising a minor portion of an amphiphilic polymer and a major portion of a non-polar ethylene polymer. A polyethylene or ethylene polymer is one in which ethylene residues form the major monomer residues present.

The films of the invention will typically have from three to nine layers, especially from five to eight layers, e.g. seven layers. The total thickness of the film will typically be in the region of 20-200 $\mu$m, particularly from 30-150 $\mu$m, preferably 40-100 $\mu$m, especially 50-80 $\mu$m.

Films of the invention may be symmetric or asymmetric. A symmetric film is one in which the layers, from the outermost layers inwards, are equal on each side of the film. For example, a symmetric film of the invention which includes five layers may have these disposed in the order non-polar layer/tie layer/barrier layer/tie layer/non-polar layer (i.e. CBABC). Where a non-polar outer layer is present, a preferred symmetric film of the invention includes seven layers disposed in the order outer layer/non-polar layer/tie layer/barrier layer/tie layer/non-polar layer/outer layer (i.e. DCBABCD). Generally, symmetric films are preferred due to their ease of synthesis and equal properties from both sides. In particular, it is preferred that each type of layer (barrier (A), non-polar (C), tie (B) and outer (D)) in the film is the same.

However, asymmetric films may be preferred for some applications. Examples of asymmetric films include the three-layer film defined above and a four layer film having layers disposed in the order outer layer/non-polar layer/tie layer/barrier layer (DCBA). Films may include more than one of each layer.

The present invention makes it possible to use barrier layers in the same film without such a severe reduction in the properties of the film as would be obtained were the tie layers of the invention not used.

## Barrier Layer (A)

The term barrier layer is a term of this art and will be familiar to the person skilled in the art. Barrier layers are layers that prevent oxygen transmission through the film to thus preserve the contents of the film from oxidation and the like.

The barrier layer must comprise a polar barrier polymer. The term polar is a familiar one in chemistry and refers to a functionality that has a significant dipole such as OH, NH- and so on. The monomer units forming the barrier layer cannot therefore simply be formed from C and H only. There must be a polar monomer involved giving rise a polar group in the formed polymer.

Polar polymers that may be used as the barrier layer include polyamide (PA), ethylene-vinyl alcohol copolymer (EVOH), polyethylene terephthalate (PET), polybutylene terephthalate (PBT), polyethylene naphthalate (PEN), polycarbonates (PC) and copolymers and mixtures thereof. It is also possible to use a metallised layer such as an Al layer. Of these, PA and EVOH are preferred, especially EVOH.

Examples of PA include nylons 4, 6, 7, 8, 11, 12, 6.6, 6.10, 6.11, 6.12, 6T, 6/6.6, 6/12, 6/6T, 6I/6T and MXD6. Examples of EVOH include copolymers having between 20 and 50 mole % ethylene content, e.g. between 30 and 45, or between 35 and 40 mole % ethylene content. Copolymers having around 38 mole % vinyl alcohol content (such as those obtainable from Kuraray, Texas, USA under the tradename EVAL, e.g. EVAL™ H171) are preferred. Polar polymers for use in the present invention may be obtained from commercial sources or synthesised by methods known in the art.

The $MFR_2$ of the barrier polymer may be 1 to 10 g/10min.

The barrier layer preferably contains only barrier polymers. Thus, the barrier layer "consists essentially of' barrier polymer components. The term consist essentially of is used herein to exclude the presence of another polymer component. It will be appreciated that polymers are often admixed with known additives described in detail below. The term consists essentially of allows for the presence of such standard additives (possibly added via a masterbatch) but excludes the presence of another polymer component.

Ideally, the barrier layer consists essentially of EVOH.

The thickness of the polar layer(s) will typically be determined by the desired physical properties and/or gas transmission rate. However, these layers will typically be at least 0.5 $\mu$m thick and preferably at least 1, 1.5 or 2 $\mu$m thick. Furthermore, the polar layer(s) will typically be less than 50 $\mu$m thick and preferably less than 30, 20, 15, 10, 7.5 or 5 $\mu$m thick. In a preferred embodiment, the polar layer has a thickness of between 2.5 and 4.5 $\mu$m, especially between 3 and 4 $\mu$m, e.g. about 3.3 $\mu$m.

In a preferred embodiment the barrier layer provides an oxygen barrier layer, e.g. providing the film with an OTR of less than 20 $cm^3/m^2$/day under standard conditions (23 °C, 1 atm and 0% relative humidity) using a 3.3 micron barrier layer, especially an OTR of less than 15, 10, 8, 6 or 5 $cm^3/m^2$/day using a 3.3 micron barrier layer. Preferred polar layers provide the film with an OTR of between 0.1 and 10 $cm^3/m^2$/day, especially between 1 and 6, 4.4 $cm^3/m^2$/day using a 3.3 micron barrier layer.

**Non polar ethylene polymer layer (C)**

The films of the invention must also comprise a non polar polyethylene layer (C). This layer provides structural integrity to the film and may also act as a sealing layer in some circumstances, e.g. where there is no (D) layer present. The non polar polyethylene layer (C) preferably contains non polar polyethylene polymers only.

If this non polar polyethylene layer (C) was placed adjacent the polar barrier layer discussed above then issues with adhesion occur. Non polar and polar layers do not adhere well to each other. This invention solves that problem with a particular tie layer as described in detail below. It will be appreciated that the polymer used in layer (C) can be the same as the polymer used in the tie layer (B) or it can be a different polymer if the tie layer non polar ethylene polymer (I) has a density of 920 to 945 $kg/m^3$.

The term non polar is used to describe polyethylenes that contain carbon and hydrogen only. These polymers are therefore free of acetate or acrylate comonomer residues or vinyl chlorides and so on. Non-polar ethylene polymers of use in present films comprise well known polyethylene products such as low density polyethylene (LDPE), linear low density polyethylene (LLDPE), and perhaps also high density polyethylene (HDPE) or mixtures thereof.

It is preferred if the non polar polyethylene layer comprises at least an LLDPE or a polyethylene (I) as defined herein or a mixture thereof. At least one polyethylene (I) is a particularly preferred choice for the non-polar polyethylene layer.

Polyethylenes of use in the non polar polyethylene layer can be made using any type of catalyst however, it is preferred if these are obtained using single site, e.g. metallocene or Ziegler Natta catalysis.

LDPE's of use in the layer (C) of the invention are ideally homopolymers (made in a well known high pressure process). Linear low-density density polymers of ethylene and the polyethylene (I) of use in the present invention are preferably copolymers of ethylene with at least one $\alpha$-olefin having from 3 to 10 carbon atoms, such as 4 to 8 carbon atoms, e.g. propylene, 1-butene, 1-hexene or 1-octene. Copolymers or terpolymers with 1-butene and 1-hexene are preferred.

The LLDPE or polyethylene (I) is typically obtained by gas-phase, liquid-phase or solution processes generally produces a product with an ethylene content from 86 to 99.5 % mole.

HDPE's of use in the invention have a density of more than 940 $kg/m^3$ and can be homopolymers or copolymers with at least one $\alpha$-olefin having from 3 to 10 carbon atoms.

Preferred LDPEs of interest in the invention may have a density of from 905 to 935 $kg/m^3$, preferably 910 and 925 $kg/m^3$.

Preferred LDPEs have a melt index (MI) of 0.1 to 20 g/10 min (e.g. when measured at 190 °C and 2.16 kg, according to standard ASTM D1238), especially from 0.2 to 10 g/10min or from 0.5 to 5 g/10 min.

Preferred LLDPEs of interest in the invention may have a density of from 905 to 940 $kg/m^3$, preferably 910 and 940 $kg/m^3$, e.g. 930 to 940 $kg/m^3$.

Preferred LLDPEs have a melt index ($MI_5$) of 0.1 to 20 g/10 min (e.g. when measured at 190 °C and 5.0 kg, according to standard ASTM D1238), especially from 0.2 to 10 or from 0.5 to 5 g/10 min, e.g. around 2.0 g/10 min.

The polyethylene (I) for use in the present invention is a non polar ethylene comprising C and H only. It has a density between 920 and 945 kg/m$^3$, especially 925 to 942 kg/m$^3$, e.g. 930 to 940 kg/m$^3$. It can therefore be considered to be an "LLDPE/MDPE" given its density. It is therefore a copolymer.

Preferred polyethylene (I)'s have a melt index (MI$_5$) of 0.1 to 20 g/10 min (e.g. when measured at 190 °C and 5.0 kg, according to standard ASTM D1238), especially from 0.2 to 10 or from 0.5 to 5 g/10min, e.g. around 2.0 g/10min.

Preferred polyethylene (I)'s have a melt index (MI$_2$) of 0.01 to 6 g/10 min (e.g. when measured at 190 °C and 2.16 kg, according to standard ASTM D1238), especially from 0.05 to 3 or from 0.1 to 2 g/10 min, e.g. around 0.5 g/10min.

Preferred polyethylene (I)'s have a melt index (MI$_{21}$) of 20 to 60 g/10 min (e.g. when measured at 190 °C and 21.6 kg, according to standard ASTM D1238), especially from 30 to 50.

A preferred polyethylene (I) has a medium molecular weight, e.g. in the region 100,000 to 200,000 Preferred polyethylene (I) have a Mw/Mn of 5 to 20.

It has been found that when polyethylene (I) is used in the tie layer (B) that improvements in mechanical properties and OTR can be achieved. In particular, the impact strength and tear resistance are improved. The improvements in tear resistance, in particular in the transverse direction are indicative of the improvement in adhesion between the layers of the film.

As noted below, in a highly preferred embodiment the non polar ethylene polymer present in layer (C) is the same as the non polar ethylene polymer used in layer (B) and ideally that polymer is a polyethylene (I) as hereinbefore defined.

It is preferred if at least one polymer used in the non polar polyethylene layer (C) is multimodal. The term "multimodal" used for any polymer of the invention, e.g. for linear low density polyethylene composition or polyethylene (I) means multimodality with respect to molecular weight distribution and includes also bimodal polymer.

Usually, a polyethylene, e.g. LLDPE or polyethylene (I) composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. polyethylene (I), will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer there is by definition a lower molecular weight component (LMW) and a higher molecular weight component (HMW). The LMW component has a lower molecular weight than the higher molecular weight component. Preferably, in a multimodal polymer of use in this invention at least one of the LMW and HMW components is a copolymer of ethylene. Further preferably, at least HMW component is an ethylene copolymer. Further preferably, also the lower molecular weight (LMW) component may be an ethylene copolymer. Alternatively, if one of the components is a homopolymer, then LMW is the preferably the homopolymer.

The multimodal non polar polyethylene used in layer (C) may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

The LMW component of any multimodal polyethylene polymer may have MFR$_2$ of at least 50, preferably 50 to 3000 g/10 min, more preferably at least 100 g/10 min. A preferred range of MFR$_2$ of the LMW component is e.g. 110 to 500 g/10 min. The molecular weight of the low molecular weight component should preferably range from 20,000 to 50,000, e.g. 25,000 to 40,000.

The density of the lower molecular weight component may range from 930 to 980 kg/m$^3$, e.g. 940 to 970 kg/m$^3$, more preferably 945 to 955 kg/m$^3$ in the case of copolymer and 940 to 975 kg/m$^3$, especially 960 to 972 kg/m$^3$ in the case of homopolymer.

The lower molecular weight component has preferably from 30 to 70 wt%, e.g. 40 to 60% by weight of the multimodal polyethylene with the higher molecular weight component forming 70 to 30 wt%, e.g. 60 to 40% by weight.

The higher molecular weight component has a lower MFR$_2$ and a lower density than the lower molecular weight component.

It is especially preferred therefore if layer (C) comprises, such as consists essentially of, a multimodal LLDPE or especially a multimodal polyethylene (I).

An especially preferred non-polar ethylene polymer is the polyethylene (I)/LLDPE called BorShape™ FX1002 (Borealis AG - Vienna, Austria).

The layer (C) preferably consists essentially of a multimodal polyethylene (I). It is further preferred if the polymer of layer (C) is prepared using a Ziegler Natta catalyst.

The thickness of the non-polar ethylene layer(s) will typically be determined by the desired physical properties, e.g. tear resistance, water resistance or heat-seal properties. However, these layers will typically be at least 2 $\mu$m thick and preferably at least 5, 10 or 15 $\mu$m thick. Furthermore, the non-polar layer (C) will typically be less than 60 $\mu$m thick and preferably less than 50, 40, 30 or 25 $\mu$m thick. In a preferred embodiment, the non-polar layer has a thickness of between 12 and 26 $\mu$m, especially between 16 and 22 $\mu$m.

In the absence of a further outer layer (D) as defined herein, the layer (C) may act as a sealing layer. In such a layer, it is a further option to combine an LLDPE or polyethylene (I) with a LDPE to provide ideal sealing properties. The LDPE content may be minor, such as 5 to 25 wt% LDPE to 75 to 95 wt% of the LLDPE/ polyethylene (I) components.

**Tie Layer (B)**

The tie layer of the invention is positioned in between and adjacent to the barrier layer (A) and the non polar polyethylene layer (C). Tie layers of the present films comprise an amphiphilic polymer and a non-polar polyethylene polymer which can be the same or different to that used in the non polar polyethylene layer (C). The non polar polyethylene of the tie layer is again, however, one comprising C and H atoms only. This ensures excellent compatibility with the layer (C) in the formed film.

Preferably the tie layer consists essentially of (e.g. consists of) one or more of each of said polymers. In a particularly preferred embodiment, the tie layer consists essentially of (e.g. consists of) a minor part of the amphiphilic polymer and a major part of a non-polar polyethylene. The tie layer has the appropriate properties to allow it to adhere both to the polar barrier layer and also to the non-polar ethylene polymer layer (C) in the film.

The term amphililic implies the presence of both non polar and polar functionalities in the polymer. Amphiphilic polymers that may be used in the tie layer include modified polyolefins, such as copolymerised or graft-polymerised polymers of an olefin (typically an $\alpha$-olefin having 2 to 8 carbon atoms, e.g. ethylene and/or propylene) and an $\alpha,\beta$-unsaturated carboxylic acid or a derivatives thereof.

The $\alpha$-olefin component in the graft amphiphilic polymer may be a polyethylene or polypropylene such as an ethylene-propylene copolymer, ethylene-butene-1 copolymer or the like. In particular, however, the olefin component is an LLDPE or HDPE, especially an LLDPE.

In the grafted amphiphilic polymers, the $\alpha,\beta$-unsaturated carboxylic acid or derivative thereof may be acrylic acid, methacrylic acid, ethacrylic acid, maleic acid, fumaric acid, an anhydride thereof (especially maleic anhydride), an ester thereof, or the like. The grafted $\alpha,\beta$-unsaturated carboxylic acid or derivative thereof is typically present in the amphiphilic polymer at a level of 0.01 to 25% by weight, preferably 0.05 to 1.5% by weight. Ideally, the graft polymer is formed by the grafting of maleic anhydride onto LLDPE.

For copolymerised amphiphilic polymers, the $\alpha,\beta$-unsaturated carboxylic acid or derivative thereof can be, or can be derived from, acrylic acid, methacrylic acid, sodium acrylate, zinc acrylate, vinylacetate or glycidylmethacrylate. The olefin monomer used is typically ethylene. Examples of copolymerized modified polyolefins therefore include ethylene-vinylacetate copolymer, ethylene-acrylic acid copolymer, ethylene-ethylacrylic acid copolymer and ethylene-sodium acrylate copolymer.

The use of grafted polymers is preferred, most preferably maleic anhydride grafted onto LLDPE.

Methods for performing copolymerisation and graft-polymerization are known in the art and suitable polymers are available via these methods and from commercial sources. One preferred amphiphilic polymer is polyethylene having grafted thereon maleic anhydride groups. Especially preferred amphiphilic polymers are produced by Mitsui Chemicals Europe under the tradename Admer, especially Admer® AT2235.

The inventors have found however, that the use of the amphiphilic polymer alone in the tie layer performs poorly in terms of the mechanical performance of the film. The inventors have surprisingly found that by including an amount of non polar polyethylene into the tie layer, not only can the mechanical performance of the film be improved but this can be achieved without loss of any adhesion between non polar polyethylene layer (C) and the barrier layer (A).

In order to maximise performance however, this polymer should be a polyethylene (I) with the particular density defined herein, or must be the same as the non polar polymer used in layer (C), ideally both.

Non-polar ethylene polymers that may be used in the tie layer is either the same as a non polar ethylene used in layer (C) or is a polyethylene (I) having a density of 920 to 945 kg/m³. In a preferred embodiment, the non polar ethylene used in the tie layer is the same as that used in layer (C) and has a density of 920 to 945 kg/m³.

Where the layer (C) comprises a blend of polymers, the non polar ethylene polymer used in the tie layer should be the same as the blend of polymers used in the (C) layer.

Polyethylenes such as LDPE, LLDPE and HDPE or mixtures thereof as hereinbefore defined for the (C) layer may therefore be used. In a preferred embodiment, the non-polar ethylene polymer used in the tie layer is the same type of polymer as used in the (C) layer, i.e. if a certain LLDPE is used in the (C) layer then the same LLDPE should be used in the tie layer. Ideally, the non-polar polyethylene used in the tie layer is the same polyethylene as used in the (C) layer.

Thus, it is preferred if the polyethylene used in the tie layer is an LLDPE, especially a multimodal LLDPE. In an especially preferred embodiment however, the polymer used in the tie layer is a polyethylene (I) having a density of 920 to 945 kg/m$^3$. Preferably polyethylene (I) has a density of 925 to 942, more preferably 930 to 940 kg/m$^3$. The non-polar ethylene polymer (I) can therefore be BorShape™ FX1002.

The polyethylene (I) can be regarded as a LLDPE/MDPE given its density range and is therefore a copolymer of ethylene with at least one C3-10 alpha olefin, ideally butene or hexene or octene or possible a terpolymer such as with butene and hexene. It is preferably a single site or Ziegler Natta polymer.

The amount of amphiphilic polymer and non-polar ethylene polymer in the polymer composition of the tie layer (B) is such that the non-polar ethylene polymer is in excess. Preferably, the non-polar ethylene polymer makes up at least 50% by weight of the polymer composition of the tie layer, especially 60 to 95 wt% by weight. Typically, the non-polar ethylene polymer makes up 65-90 wt%, such as 75-85 % by weight, e.g. around 80% by weight of the layer (B). The remaining material in the tie layer is preferably made up mostly of the amphiphilic polymer, i.e. this is preferably present at a level of less than 50 wt%, such as 5 to 40 wt% by weight, typically at a level of 5-35 wt%, such as or 15-25 % by weight, e.g. around 20% by weight of layer (B).

The polymer composition of the tie layer is preferably produced by admixing (e.g. dry or melt-blending) the amphiphilic polymer(s) with the non-polar polyethylene. This admixture may be heated before the tie layer is co-extruded or laminated with the other layers of the film.

The thickness of the tie layer(s) will depend in part on the desired properties of the multilayer film. However, these layers should be thick enough to provide the film with the desired impact and tear resistance properties. Thus, tie layers will typically have a thickness of between 0.5 and 20 μm, preferably at least 1, 1.5 or 2 μm. The tie layer(s) will typically be less than 15 μm thick and preferably less than 12, 10, 7.5 or 5 μm thick. In a preferred embodiment, the tie layer has a thickness of between 2.5 and 4.5 μm, especially between 3 and 4 μm, e.g. about 3.3 μm.

**Other layers**

The film of the invention may also contain further layers outside the main three layers defined in the invention. Ideally any further layer may act as a sealing layer to allow the film to seal to itself or to another substrate.

Ideally, if a further layer is present then there should be a further layer on both sides of the polymer film, preferably an identical further layer on both sides of the film.

Any additional outer layer present preferably comprises, such as consists essentially of, a further non-polar polyethylene. The non polar ethylene polymer which is part of an outer layer is again preferably a polyethylene based polymer in which ethylene forms the major component.

Preferred components of the outer layer include LDPE, LLDPE and HDPE polymers and mixtures thereof, e.g. a polyethylene (I) as hereinbefore defined. In a preferred embodiment, the outer layer comprises more than one polyethylene. Ideally the outer layer (D) comprises at least an LLDPE or polyethylene (I) (as defined for layer (B)) or at least an LDPE (as defined for layer (C)), especially a mixture of an LLDPE and an LDPE. Any LLDPE present can be multimodal or unimodal.

Any polyethylene present in the outer layer can be made using single site or Ziegler Natta catalysis. LLDPE may be present in a major amount, i.e. greater than 50% of the polymer composition of the outer layer. In this case, the LDPE, which is also preferably as defined herein, is present in a minor amount, i.e. less than 50% of the polymer component of the outer layer.

Preferably the LLDPE is present in an amount of from 75-99% by weight of the outer layer, especially 85-95 % by weight, e.g. around 90 % by weight. The LDPE is preferably present in an amount of from 1-25 % by weight of the outer layer, especially from 1-20 % or 5-15 % by weight, e.g. around 10 % by weight.

In an especially preferred embodiment, the outer layer comprises LLDPE and LDPE, such as around 75 to 95 % by weight of a LLDPE and around 5 to 25 wt % of LDPE.

The thickness of the outer layer(s) will typically be determined by the desired physical properties of the film, e.g. tear resistance or heat-seal properties. However, these layers will typically be at least 1 μm thick and preferably at least 2, 5, or 7.5 μm thick. The outer layer(s) will typically be less than 50 μm thick and preferably less than 40, 30, 20 or 15 μm thick. In a preferred embodiment, the outer layer has a thickness of between 6 and 16 μm, especially between 8 and 12 μm, e.g. about 9.8 μm.

If the outer layer (D) is present, a preferred film structure is therefore DCBABCD.

The films of the invention are more resilient than equivalent films that do not have tie layers with a composition as described herein. Thus, the films of the invention preferably have an Elmendorf Tear value in the machine direction (MD) of at least 5 % more than that of a corresponding film having a tie layer without a non-polar ethylene polymer present. These films preferably have an Elmendorf Tear (MD) of at least 145 MPa (N/mm), preferably at least 150 or 155 MPa.

The films preferably also have an Elmendorf Tear value in the transverse direction (TD) of at least 50 % more than that of a corresponding film having a tie layer without a non-polar ethylene polymer therein (i.e. a tie layer made of the amphiphilic polymer alone). These films preferably have an Elmendorf Tear (TD) of at least 300 MPa (N/mm) when measured according to ASTM D1922, preferably at least 350, such as at least 400 or even at least 450 MPa.

The films preferably have a Dart Drop Impact (DDI) of at least 25 % more than that of a corresponding film having a tie layer without a non-polar ethylene polymer present. Such films preferably have a DDI of at least 250 g, preferably at least 275 or even at least 300 g.

In another preferred embodiment, the tensile modulus in the machine direction and/or the transverse direction is preferably almost the same as the equivalent film having a tie layer without a non-polar ethylene polymer present, e.g. no more than 5 % lower or higher, especially no more than 2 % lower or higher. Such films preferably have a tensile modulus (MD) of at least 500 MPa and/or a tensile modulus (TD) of at least 550 MPa.

**Preparation of polymers**

The polymers used in the films of the invention are all well known commercial materials and polymerisation methods well known to the skilled person may be used. A further discussion of the necessary polymerisation processes is not required here.

Before the extrusion the polymers may be mixed with the desired additives, fillers and adjuvants as known in the art. Suitable additives include pigments, antioxidants, nucleating agents, clarifiers, polymer processing aid, antislip or antiblocking agents and UV stabilizers.

Films according to the invention may be prepared by methods known in the art. Such methods include co-extrusion and lamination. The films of the invention may be cast or blown films, preferably blown films. Techniques for the coextrusion and blowing of polymer films are well known and will not be discussed further herein.

The films of the invention may be used for packaging items such as foods, pharmaceuticals, cosmetics, medical devices and the like. Especially preferably, the invention provides a method of packing a foodstuff, especially a perishable foodstuff (e.g. raw or cooked meat, fruit, vegetables, dairy products and the like).

The invention will now be further described with reference to the following non-limiting Examples and Figures in which:

Figure 1 shows the structure of the 7-layer film of Example 2.
Figure 2 shows the measured tear resistance of films 1 and 2.
Figure 3 shows the Dart Drop Impact resistance of films 1 and 2.
Figure 4 shows the instrumented puncture resistance (4.4 m/s and 23 °C) of films 1 and 2.

**Analytical Tests**

Oxygen transmission rate values were measured by ISO15105-1 using a pressure sensor method (standard conditions 23°C). OTR is measured in a chamber where first both sides of the film are evacuated and then $O_2$ is slowly let to the other side and the gas sensor measures the content from the vacuum side.

| Relative Puncture Test: | |
|---|---|
| Method | ISO 7765-2 |
| Description | Dynatest |
| Velocity | 4,4 m/s |
| Striker | 20 mm |
| Striker material | Stainless steel |
| Support ring | 40 mm |

Melt Flow Rate

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of molecular weight distribution and denotes the ratio of flow rates at different loads. Thus, $FRR_{21/2}$ denotes the value of $MFR_{21}/MFR_2$.

<u>Density</u>

Density of the polymer was measured according to ISO 1183 / 1872-2B.

For the purpose of this invention the density of the blend can be calculated from the densities of the components according to:

$$\rho_b = \sum_i w_i \cdot \rho_i$$

where $\rho_b$ is the density of the blend,
$w_i$ is the weight fraction of component "i" in the blend and
$\rho_i$ is the density of the component "i".

<u>Molecular weight</u>

Molecular weight averages, molecular weight distribution (Mn, Mw,Mz MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\Sigma_{i=1}^{N} A_i}{\Sigma_{i=1}^{N} \left( \frac{A_i}{M_i} \right)} \quad (1)$$

$$M_w = \frac{\sum_{i=1}^{N} \left[ (A)_i \; x \; M_i \right)}{\sum_{i=1}^{N} A_i} \quad (2)$$

$$M_z = \frac{\Sigma_{i=1}^{N} \left[ (A)_i \; x \; M_i^2 \right)}{\sum_{i=1}^{N} \left( \frac{A_i}{M_i} \right)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \alpha_{PS} = 0.655$$

$$K_{PE} = 39 \times 10^{-3} \text{ mL/g}, \alpha_{PE} = 0.725$$

$$K_{PP} = 19 \times 10^{-3} \text{ mL/g}, \alpha\alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

**Tensile Properties:**

Tensile modulus was determined according to ISO 527 using injection moulded test specimens acc ISO 527/1B, moulded as described in EN ISO 1873-2 (170 x 10 x 4 mm).

**Impact Strength** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g).

**Tear resistance (determined as Elmendorf tear (N)):** Applies for the measurement both in machine direction and in transverse direction. The tear strength is measured using the ISO 6383/2 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen. The relative tear resistance (N/mm) is then calculated by dividing the tear resistance by the thickness of the film.

**Example 1 - Tie layer composition**

An adhesive polymer composition was formulated by dry-blending 20% by weight of an amphiphilic polymer, Admer® AT2235 (Mitsui Chemicals Europe GmbH - Dusseldorf, Germany), with 80% by weight of a LLDPE, (Grade FX1002 (Borealis Polyolefine GmbH - Linz, Austria). Admer® AT2235 is a maleic anhydride grafted linear low density polyethylene. FX1002 is a multimodal Ziegler Natta produced LLDPE. Properties of these materials and the other polymers used in the examples are given in table 1.

Table 1

| Polymer | Density kg/m$^3$ | MFR$_2$ g/10min |
|---|---|---|
| Admer AT2235 | 920 | 0.3 |
| FX 1002 | 937 | 2.0 (MFR$_5$) |
| Exceed 1018 (LLDPE) | 918 | 1.0 |
| LDPE (FT5232) | 923 | 0.75 |
| EVAL H171 (EVOH) | 1.17 | 1.7 |
| NF358E (maleic anhydride grafted LLDPE formed by (AT2235 blended with a further LLDPE) | 910 | 1.6 |

**Example 2 - Production of barrier films**

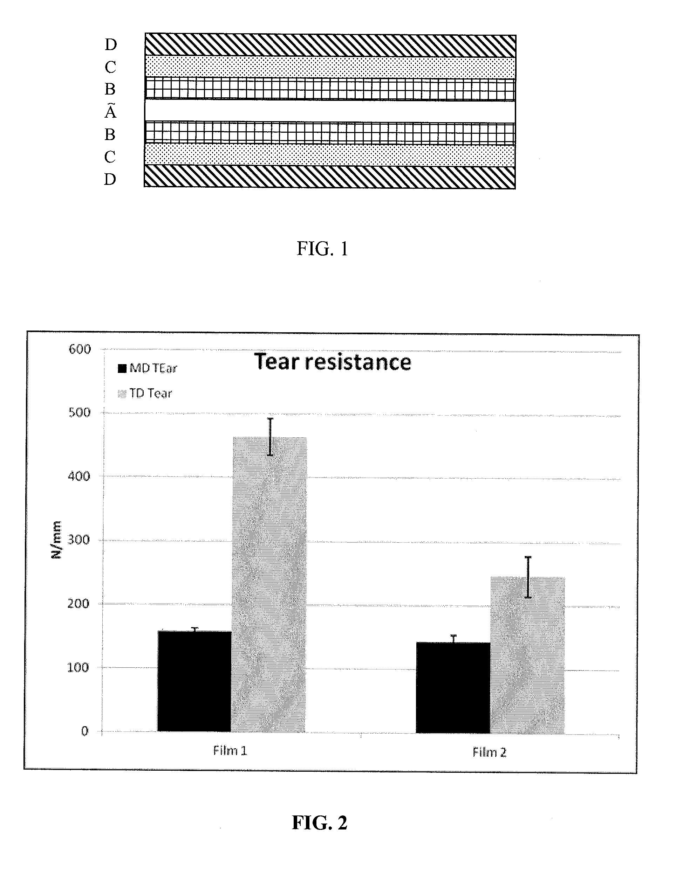

Two symmetric 7-layer film structures were made to test the difference between using a conventional adhesive polymer and the adhesive polymer composition of Example 1 as a tie layer. The structure of these films is shown in Figure 1 and detailed in table 2.

The films were prepared by coextrusion of the layers. Films having a multilayer structure were coextruded on a 7-layer Alpine coextrusion line with die diameter 300 mm, at a blow up ratio (BUR) of 1:2,5, and Die gap 1.5 mm. The frostline height cannot be clearly indicated, as it varies with each layer, but was appr. ca 900 mm.

The film layers were DCBABCD. The temperature (melt temperatures) for the layers were according the table below, the temperature setting on the extruder die was 210°C.

| MELT TEMP. D | °C | 236 | 5 D |
| MELT PRESSURE D | bar | 524 | |
| MELT TEMP. C | °C | 234 | C |
| MELT PRESSURE C | bar | 571 | |
| MELT TEMP. B | °C | 217 | B |
| MELT PRESSURE B | bar | 311 | |
| MELT TEMP. A | °C | 214 | A |
| MELT PRESSURE A | bar | 181 | |
| MELT TEMP. B | °C | 218 | B |
| MELT PRESSURE B | bar | 295 | |
| MELT TEMP. C | °C | 236 | C |
| MELT PRESSURE C | bar | 551 | |
| MELT TEMP. D | °C | 237 | D |
| MELT PRESSURE D | bar | 466 | |

Layers D were a blend of 90% by weight of metallocene polyethylene resin, Exceed™ 1018 (ExxonMobil Chemical Europe - Machelen, Belgium), with 10% by weight of a LDPE (FT5232). These layers were 9.8 $\mu$m thick.

Layers C were a LLDPE layer based on FX1002. These layers were 18.2 $\mu$m thick.

Layer A was a 38 mol% EVOH copolymer, EVAL™ H171 (Kuraray - Texas, USA). This layer was 3.3 $\mu$m thick. Layer D was used as a barrier layer in each case, i.e. to reduce the gas permeability of the film.

Layers B were tie layers, i.e. adhesive layers to adhere layers C to layer A. The tie layers in film 1 were composed of the adhesive composition of Example 1.

Film 2 is identical to film 1 except that the tie layers of film 2 were composed of an amphiphilic polymer material, Admer® NF358E (Mitsui Chemicals Europe GmbH - Dusseldorf, Germany) which is a blend of AT2235 and a linear low density polyethylene of density less than 910 kg/m$^3$. In each case, the tie layers were 3.3 $\mu$m thick.

The mechanical properties of the two barrier films were then assessed using conventional tests. Results are presented in Table 3 below.

Table 2

| | Inventive example film 1 | | | Comparable example film 2 | |
|---|---|---|---|---|---|
| layer | micron | Material | | micron | material |
| D | 9,8 | 90% Exceed 1018 + 10% LD | | 9,8 | 90% Exceed 1018 + 10% LD |
| C | 18,2 | FX1002 | | 18,2 | FX1002 |
| B | 3,3 | **20% Admer AT2235 + 80% FX1002** | | 3,3 | **Admer NF358E** |
| A | 3,3 | EVOH EVAL H171 | | 3,3 | EVOH EVAL H171 |
| B | 3,3 | **20% Admer AT2235 + 80% FX1002** | | 3,3 | **Admer NF358E** |
| C | 18,2 | FX1002 | | 18,2 | FX1002 |
| D | 9,8 | 90% Exceed 1018 + 10% LD | | 9,8 | 90% Exceed 1018 + 10% LD |

Table 3 - Mechanical properties of the 7-layer barrier films

|  | Film 1 | Film 2 |
|---|---|---|
| Elmendorf Tear Strength MD (MPa) | 158 | 143 |
| Elmendorf Tear Strength TD (MPa) | 464 | 247 |
| Dart Drop Impact (g) | 320 | 237 |
| Tensile Modulus MD (MPa) | 542 | 551 |
| Tensile Modulus TD (MPa) | 616 | 623 |
| Relative puncture resistance (J/mm) | 13 | 11.5 |

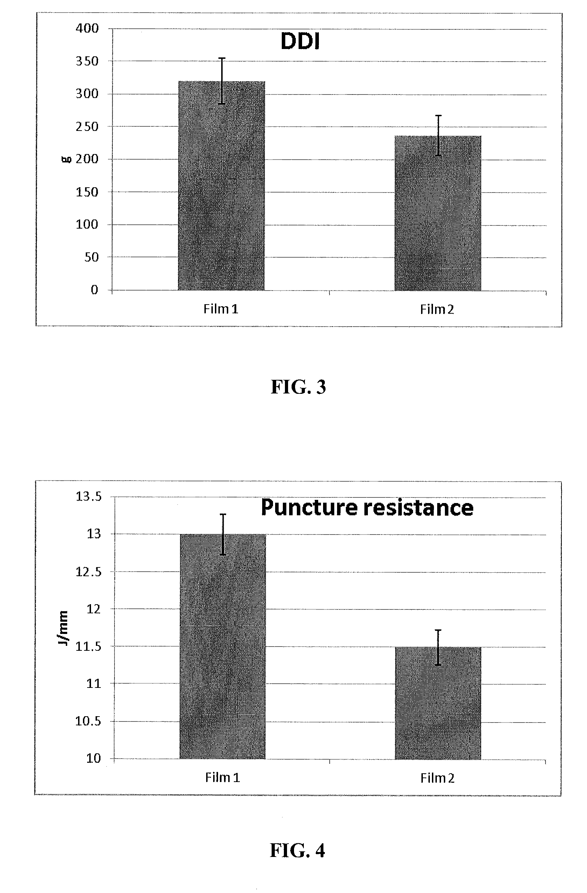

Film 1 shows remarkably better impact and tear resistance properties, as can be seen in Table 3 and in the Figures 2 to 4. The tear resistance in the transverse direction (TD) is improved by around 100% when the LLDPE FX 1002 is added to the amphiphilic adhesive material in the tie layer. The Dart Drop Impact resistance is also improved significantly, by around 35%. The increase in impact resistance can be seen in the instrumented puncture test, with the relative puncture resistance improving by around 15%.

During the tests described above, it was also noticed that the adhesion between layers C and A was good with both tie layers. This could be seen in sealing measurement, there was no separation of the layers during the measurement, and in the tensile measurement, where also no layer separation was observed.

The use therefore of FX1002, a polymer identical to that used in layers (C) in the tie layer and a polymer of density 920 to 945 kg/m$^3$ caused a marked improvement in performance.

**Example 3 - Gas permeability of the barrier films**

The oxygen transmission rate (OTR) of the two films was also assessed, to ensure that the modified adhesive in the tie layer did not significantly affect this value. Results are presented in Table 4 below. Table 4 - OTR of films 1 and 2 **Film 1 Film 2** OTR (cm$^3$/m$^2$/day) 4.4 4.2

The oxygen transmission rate remained on the same level for each film, as expected, because the barrier layer in each case remained the same.

**Claims**

1. A multilayer polymer film comprising

    (A) a barrier layer comprising a polar barrier polymer;
    (B) a tie layer comprising a minor portion of an amphiphilic polymer and a major portion of a non-polar ethylene polymer; and
    (C) a non-polar polyethylene layer comprising a non-polar ethylene polymer as used in layer (B);

    wherein layer (B) is adjacent layers (A) and (C) and layers (A) to (C) are present in the order ABC in the film.

2. A multilayer polymer film comprising

    (A) a barrier layer comprising a polar barrier polymer;
    (B) a tie layer comprising a minor portion of an amphiphilic polymer and a major portion of a non-polar ethylene polymer having a density of 920 to 945 kg/m$^3$; and
    (C) a non-polar polyethylene layer comprising a non-polar ethylene polymer;

    wherein layer (B) is adjacent layers (A) and (C) and layers (A) to (C) are present in the order ABC in the film.

3. A film as claimed in claim 1 or 2 comprising

    (A) a barrier layer comprising a polar barrier polymer;
    (B) a tie layer comprising a minor portion of an amphiphilic polymer and a major portion of a non-polar ethylene polymer having a density of 920 to 945 kg/m$^3$; and

(C) a non-polar polyethylene layer comprising a non-polar ethylene polymer having a density of 920 to 945 kg/m$^3$ the same as the non polar ethylene polymer used in step (B).

4. A film as claimed in any preceding claim further comprising at least one outer layer (D) which is disposed adjacent to the non-polar polyethylene layer (C), which outer layer comprises a non-polar ethylene polymer.

5. A film as claimed in any preceding claim wherein the non polar ethylene polymer of layer (C) is multimodal.

6. A film as claimed in any preceding claim wherein the non polar ethylene polymer of layer (B) has a density of 930 to 940 kg/m$^3$.

7. A film as claimed in any preceding claim wherein the non polar ethylene polymer of layer (B) is an LLDPE and has a density of 930 to 940 kg/m$^3$.

8. A film as claimed in any preceding claim wherein the amphiphilic polymer forms 5 to 35 wt% of the in layer (B)

9. A film as claimed in any preceding claim wherein the barrier polymer is PA or EVOH, prefer EVOH.

10. A film as claimed in any preceding claim wherein layer (D) comprises a blend of LLDPE and LDPE.

11. A film as claimed in any preceding claim having the layer structure DCBABCD.

12. Use of a multilayer polymer film as defined herein as a packaging material, especially as a packaging material for a food, a pharmaceutical, a cosmetic or a medical device.

13. A method for packaging an item, especially a food, a pharmaceutical, a cosmetic or a medical device, the method comprising wrapping an item with a film as herein defined.

14. A process for preparing a film as defined herein, the process comprising co-extruding and/or laminating the barrier layer, the non-polar polyethylene layer and the tie layer, optionally with the outer layer so as to form said film.

FIG. 1

FIG. 2

**FIG. 3**

**FIG. 4**

Europäisches
Patentamt

European
Patent Office

Office européen
des brevets

## EUROPEAN SEARCH REPORT

Application Number

EP 13 16 5010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/052471 A1 (BOTROS MAGED G [US]) 28 February 2013 (2013-02-28) * claims 1-3,9,12,13 * * paragraphs [0057] - [0072] * ----- | 1-14 | INV. B32B27/30 B32B27/32 |

|  |  |  | TECHNICAL FIELDS SEARCHED (IPC) |
|---|---|---|---|
|  |  |  | B32B |

The present search report has been drawn up for all claims

| Place of search | Date of completion of the search | Examiner |
|---|---|---|
| Munich | 25 July 2013 | Schambeck, Werner |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 13 16 5010

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2013

| Patent document cited in search report | Publication date | Patent family member(s) | Publication date |
|---|---|---|---|
| US 2013052471 A1 | 28-02-2013 | US 2013052471 A1<br>WO 2013032926 A1 | 28-02-2013<br>07-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2208685 A